# EUROPÄISCHE PATENTSCHRIFT

(11) **EP 2 933 423 B1**
(45) Veröffentlichungstag und Bekanntmachung des Hinweises auf die Patenterteilung: **16.11.2016**
(21) Anmeldenummer: 15163541.4
(22) Anmeldetag: 14.04.2015
(51) Int. Cl.: E06B 3/82, E06B 3/70

(54) **TÜRFLÜGEL**
DOOR SWING
VANTAIL DE PORTE

(30) Priorität: 15.04.2014 DE 102014105388
(43) Veröffentlichungstag der Anmeldung: 21.10.2015
(73) Patentinhaber: PaX AG, 55218 Ingelheim (DE)
(72) Erfinder: Ruhland, Thomas, 68753 Waghäusel (DE)
(74) Vertreter: Müller, Jochen

(56) Entgegenhaltungen:
- EP-A1- 1 918 501
- EP-A2- 1 772 585
- WO-A1-2006/104383
- WO-A1-2011/152569
- DE-U1-202011 000 669
- GB-A- 2 258 685
- US-A1- 2005 102 967
- US-A1- 2010 269 450

## Beschreibung

Die Erfindung bezieht sich auf einen Türflügel umfassend einen Rahmen mit mindestens zwei längsseitigen Rahmenelementen und zumindest einer Deckschicht.

Die EP 1 918 501 A1 offenbart ein Trennelement eines Raumes, mit einer einer Innenseite des Raumes zugewandten ersten Verkleidung und einer einer Außenseite des Raumes zugewandten zweiten Verkleidung, wobei die Verkleidungen umfangsseitig mit einem Rahmen fest verbunden sind. Der Rahmen umfasst einen ersten Teil, der gegenüber einem zweiten Teil beweglich ist, wobei der erste Teil wenigstens zwei Freiheitsgrade in einer zu den Verkleidungen im Wesentlichen parallelen Ebene aufweist. Der erste Teil des Rahmens ist durch ein Organ zur Unterbrechung der Wärmebrücke gebildet und umfasst ein Kunststoffprofil, dessen eines Ende mit Spiel in einer an dem zweiten Teil des Rahmens oder an einem Zwischenglied zwischen dem ersten und dem zweiten Teil des Rahmens ausgebildeten Aufnahme angebracht ist.

Im Weiteren zeigt die WO 2006/104383 A1 einen Türflügel mit einem Rahmen umfassend zwei längsseitige Rahmenelemente, wobei in eines der Rahmenelemente Öffnungen zum Einsetzen von Funktionsträgern, die zum einen als ein elektrisches Schloss und zum anderen als ein Elektronikbauteil ausgebildet sind. aufweist.

Darüber hinaus beschreibt die US 2010/0269450 A1 einen Türflügel mit einem Rahmen umfassend zwei längsseitige Rahmenelemente zwischen denen ein Funktionselement angeordnet ist, das im Wesentlichen die von dem Rahmen gebildete Innenfläche überspannt.

Aus der EP 1 772 585 A2 ist es bekannt, einem Rahmen ein Gitter zuzuordnen und die GB 2 258 685 A lehrt die Anordnung einer gelochten Stahlplatte in einem Rahmen.

Aus der Praxis sind Rahmen für Türen bzw. Fenster bekannt, die eine beliebige Füllung aufnehmen wobei die Rahmen als Flügelrahmen ausgebildet und schwenkbar oder feststehend ausgebildet sein können. Handelt es sich um einen Rahmen mit einer nicht durchsichtigen Füllung in einer Gebäudewand, insbesondere einer Außenwand, ist oftmals in der Füllung eine Dämmschicht vorhanden. Der Rahmen haltert eine innere und/oder äußere Deckschicht, die entweder zwischen den Rahmenteilen oder die Rahmenteile überdeckend angeordnet ist. Die Deckschicht lässt sich beliebig funktional und/oder optisch ansprechend gestalten und überdeckt beispielsweise die Füllung. Der Rahmen trägt eine innere und/oder äußere Deckschicht, die entweder zwischen den Rahmenteilen oder die Rahmenteile überdeckend angeordnet ist. Die Deckschicht lässt sich beliebig funktional und/oder optisch ansprechend gestalten und überdeckt beispielsweise die Füllung.

Der Erfindung liegt die Aufgabe zugrunde, einen Rahmen der eingangs genannten Art zu schaffen, der zusätzliche Funktionalitäten aufweist. Erfindungsgemäß wird die Aufgabe durch die Merkmale des unabhängigen Anspruchs 1 gelöst.

Die Unteransprüche stellen vorteilhafte Ausgestaltungen der Erfindung dar.

Türflügel umfassend einen Rahmen mit mindestens zwei längsseitigen Rahmenelementen und zumindest einer Deckschicht, wobei
- jedes der Rahmenelemente ein zu einer Raumseite orientiertes Innenprofil und ein zu einer Außenseite orientiertes Außenprofil umfasst,
- das Innenprofil derart formschlüssig mit dem als ein im Querschnitt L-förmiges Hohlkammerprofil mit einem langen Schenkel und einem dazu rechtwinklig verlaufenden kurzen Schenkel ausgebildeten Außenprofil verbunden ist, dass das Innenprofil relativ zu dem Außenprofil in Richtung einer Längsachse verschiebbar ist,
- eine freie Stirnseite des kurzen Schenkels eine Auflage für die äußere Deckschicht einer Füllung bildet und
- ein auf dem langen Schenkel des Außenprofils aufliegender und in wesentlichen Teilen von der Deckschicht überdeckter Funktionsträger angeordnet ist, der mit dem Außenprofil an dem langen Schenkel des Außenprofils festgelegt ist, wozu das Außenprofil in seinem kurzen Schenkel eine Aufnahmenut für eine Klemmleiste aufweist.

Eine bevorzugte Verwendung findet der Türflügel bei einer Haustür oder Wohnungsabschlusstür.

Der Funktionsträger kann beispielsweise selbst eine Funktionalität aufweisen oder als Halterung bzw. Befestigungseinrichtung für zusätzliche Bauteile ausgebildet sein. Da der Funktionsträger innerhalb des Rahmens und von der Füllung zum Großteil überdeckt angeordnet ist, wirkt er sich nicht störend auf den für einen Betrachter wahrnehmbaren optischen Eindruck der Tür oder des Fensters aus. Der Funktionsträger kann beispielsweise den Rahmen aussteifende Funktionen übernehmen oder eine Vorrichtung zur Beobachtung der Umgebung haltern. Weitere bevorzugte Ausführungsvarianten werden im Folgenden dargestellt. Selbstverständlich kann die Deckschicht beispielsweise zumindest in bestimmten Bereichen transparent oder transluzent und in anderen Bereichen undurchsichtig ausgebildet sein. Es ist auch denkbar, die gesamte Deckschicht transparent oder transluzent oder undurchsichtig auszugestalten. Ebenso wird die Füllung beispielsweise in Bereichen, in denen optische Funktionselemente angeordnet sind, entweder freigeschnitten oder transparent ausgeführt, so dass das optisch wirkende Funktionselement seine bestimmungsgemäße Wirkung entfalten kann.

In Ausgestaltung überspannt der Funktionsträger zumindest die von dem Rahmen gebildete Innenfläche oder ist laschenartig an einem der Rahmenelemente befestigt oder riegelförmig zwischen zwei Rahmenelementen angeordnet. Die Größe des Funktionsträgers ist nur durch die Größe des Rahmens beschränkt und mindestens so groß bemessen, dass ein innerhalb des Rahmens anzuordnendes Funktionselement, beispielsweise ein Temperatursensor oder ein Mikrofon oder dergleichen, zuverlässig zu befestigen ist. Im Weiteren kann der Funktionsträger an rahmenseitigen Halteleisten oder Befestigungsflanschen bzw. Befestigungslaschen kraftschlüssig oder formschlüssig oder stoffschlüssig festgelegt werden.

Vorzugsweise ist der Funktionsträger zur Speicherung von Wärme oder Kälte oder als Dämmung gegen Schall, Wärme, Kälte, Strahlung und/oder Schadstoffe ausgebildet. Diese Funktionalitäten steigern im Wesentlichen den Komfort für die Bewohner einer beispielsweise mittels einer entsprechenden Tür verschlossenen Wohnung. Zur Realisierung sicherheitsrelevanter Funktionen ist vorzugsweise der Funktionsträger beständig gegen Beschuss oder Einbruch oder Feuer ausgebildet ist. Hierbei kann der Funktionsträger plattenförmig sein und sich im Wesentlichen über den gesamten Rahmen erstrecken. Selbstverständlich ist ein sicherheitsrelevanter Funktionsträger ohne die Bildung von Spalten zwischen dem Funktionsträger und dem Rahmen zuverlässig befestigt, um auch einer großen Krafteinwirkung stand zu halten. Der Funktionsträger kann aus Kunststoffen oder Metallen oder Verbindungen dieser Materialen gefertigt sein. Selbstverständlich kann es auch zweckmäßig sein mehrere Funktionsträger parallel zueinander in einem gemeinsamen Rahmen oder in mehreren Rahmen anzuordnen.

In weiterer Ausgestaltung ist dem Funktionsträger mindestens ein elektrisches oder elektromechanisches Funktionselement zugeordnet. Das Funktionselement kann beispielsweise auf den zuvor erläuterten Funktionsträger, selbstverständlich auch gemeinsam mit weiteren Funktionselementen angeordnet sein. Bei dem Funktionselement kann es sich beispielsweise um einen mit einem entfernten Empfänger kommunizierenden Sender handeln. Aber auch eine motorisch betriebene partielle Öffnung, beispielsweise eine Lüftungsklappe oder Haustierklappe , die sich beispielsweise aufgrund eines Temperatur- und/oder Luftgütesensorsignals oder eines Transpondersignals oder eines Fernbedienungssignals selbsttätig öffnet und schließt, ist zur Anordnung denkbar. Hierbei kann die Klappe selbst an den Funktionsträger oder an einer Füllung bzw. der Deckschicht vorzugsweise schwenkbar gelagert sein und der zugeordnete Motor ist gemeinsam mit dem Empfänger für das Transpondersignal an dem Funktionsträger befestigt.

Zweckmäßigerweise ist das Funktionselement bei einer lichtstrahlungsdurchlässigen Füllung als ein Photovoltaikelement ausgebildet, das mit einem weiteren elektrischen und/oder elektromechanischen Funktionselement zur Speicherung elektrischer Energie und/oder zur Versorgung mit elektrischer Energie gekoppelt ist. Dementsprechend kann das Photovoltaikelement an dem Funktionsträger angeordnete Funktionselemente mit Spannung versorgen und eine Zuleitung oder Batterie ist im Wesentlichen entbehrlich.

Um weitere Funktionalität in den Rahmen zu integrieren, ist bevorzugt das Funktionselement als ein Sensor oder Aktor ausgebildet, insbesondere als ein Sensor einer Bilderfassungseinrichtung oder einer Tonerfassungs- oder Tonwidergabeeinrichtung oder ein Lagesensor oder ein Erschütterungssensor oder Fingerabdruckerkennungssensor, oder ein Aktor einer Schließanlage oder einer Verriegelungseinrichtung. Beispielsweise kann ein Fingerabdruckerkennungssensor dem Funktionsträger zugeordnet sein, der eine Auswerteeinrichtung und eine Speichereinrichtung für Fingerabdrücke umfasst, und der bei der Erkennung eines gespeicherten Fingerabdrucks einen zum Öffnen einer Verriegelungseinrichtung betätigt. Als Schließanlage kann ein Motor zum Verschwenken des Rahmens, respektive der Tür, vorgesehen sein. Selbstverständlich ist im Bereich der Bilderfassungseinrichtung die äußere Deckschicht derart transparent oder im Bereich der Bilderfassungseinrichtung ausgeschnitten, dass eine Aufnahme des Außenbereichs der vorzugsweise direkt an die Decksicht angekoppelten Bilderfassungseinrichtung möglich ist. Die Bilderfassungseinrichtung umfasst hierzu einen entsprechenden Bildsensor, der miniaturisiert ausgebildet und mit einer zugeordneten optischen Einrichtung installiert sein kann. Auch im Bereich des Fingerabdruckerkennungssensors ist es erforderlich, die Deckschicht entsprechend zur Erfassung eines Fingerabdrucks auszubilden.

In weiterer Ausgestaltung ist das Funktionselement als ein optisch oder akustisch wahrnehmbares Signalelement ausgestaltet und vorzugsweise mit einer Alarmanlage verbunden. Das Signalelement kann beispielsweise ein Beleuchtungselement oder eine Sirene sein, das bzw. die dem Funktionsträger zugeordnet ist und von der Alarmanlage angesteuert bzw. aktiviert wird. Sonach kann beispielsweise bei einem Alarm und entsprechender Ausgestaltung des Signalelementes das gesamte Türblatt aufleuchten.

Die datentechnische Verbindung zwischen den Sensoren/Aktoren und einer Rechnereinrichtung ist mittels einer innerhalb des Rahmens angeordneten Datenübertragungseinrichtung sichergestellt. Zur Auswertung der Sensorsignale und/oder Ansteuerung der Aktoren, stehen zweckmäßigerweise die Sensoren und/oder die Aktoren mit einer Datenverarbeitungseinrichtung einer Hausautomatisierungseinrichtung in Verbindung.

Jedes der Rahmenelemente umfasst ein zu einer Raumseite orientiertes Innenprofil und ein zu einer Außenseite orientiertes Außenprofil, wobei das Innenprofil derart formschlüssig mit dem Außenprofil verbunden ist, dass das Innenprofil relativ zu dem Außenprofil in Richtung einer Längsachse verschiebbar ist. Da die Verbindung zwischen dem Außenprofil und dem Innenprofil eine Relativbewegung in Richtung der die größten Längenänderungen aufweisenden Längsachse der beiden Profile zulässt, ist eine Entkopplung des Innenprofils gegenüber dem Außenprofil gegeben, wodurch Spannungen aufgrund einer thermisch induzierten Längenänderung und damit einhergehende Formänderungen vermieden bzw. wesentlich reduziert sind.

Nach einer Weiterbildung ist zwischen dem Innenprofil und dem Außenprofil eine in Richtung der Längsachse verschiebbare Klipsverbindung vorgesehen. Bevorzugt weist das Außenprofil zwei zueinander beabstandete Klipsarme auf, die mit Hinterschnitten des Innenprofils zusammenwirken, wobei das Innenprofil als ein im Querschnitt rechteckförmiges Hohlkammerprofil ausgebildet ist, das an seiner einen Breitseite die Hinterschnitte aufweist. Das Außenprofil und das Innenprofil können in einem Zieh- oder Extrudierverfahren, beispielsweise aus einer Aluminiumlegierung oder einem Kunststoff, hergestellt werden. Da aufgrund der einachsigen Entkopplung, also der Verschiebbarkeit in Richtung der Längsachse, die Gleichartigkeit der Längenausdehnungskoeffizienten nur von untergeordneter Wichtigkeit ist, besteht die Möglichkeit, beispielsweise das Innenprofil aus einer Aluminiumlegierung und das Außenprofil aus einem Kunststoff herzustellen oder umgekehrt. Die Hinterschnitte können im Wesentlichen in das Innenprofil integriert sein, als eine Art Klipsnasen, oder als Gegenklipsarme ausgebildet sein, die sich von dem Innenprofil wegerstrecken.

Vorzugsweise ist das Außenprofil als ein im Querschnitt L-förmiges Hohlkammerprofil ausgebildet und weist an seinem langen Schenkel die zueinander beabstandeten Klipsarme auf. Das Außenprofil ist derart angeordnet, dass es mit der freien Stirnseite seines kurzen Schenkels nach außen weist, und der lange Schenkel parallel zum Innenprofil ausgerichtet ist. Dementsprechend ist die nach außen gerichtete Fläche des kurzen Schenkels relativ klein, was sich positiv auf die Wärmeübertragung auswirkt, und die nach außen gerichtete Fläche des langen Schenkels, die der die Klipsarme aufweisenden Fläche gegenüberliegt, kann beispielsweise zur Auflage einer flächigen Wärmedämmung dienen.

Der Funktionsträger ist auf dem langen Schenkel des Außenprofils festgelegt. Der Funktionsträger kann mit dem Außenprofil verschraubt, vernietet, verklebt oder dergleichen kraft- bzw. formschlüssig verbunden sein.

Das Außenprofil weist in seinem kurzen Schenkel eine Aufnahmenut für eine Klemmleiste zur Fixierung des Funktionsträgers auf dem langen Schenkel auf. Bei der Klemmleiste kann es sich um eine aus dem Stand der Technik bekannte Glashalteleiste oder eine sonstige Halterung handeln, die den Funktionsträger auf dem langen Schenkel des Außenprofils fixiert.

Vorzugsweise weist das Außenprofil an einer rahmenaußenseitigen Profilstirnseite mindestens eine sich über die gesamte Länge erstreckende konvexe Dichtwölbung auf. Die Dichtwölbung ist zur Anlage gegen einen Dichtgummi vorgesehen und kann insbesondere zwei nebeneinander ausgebildete Dichtwölbungen umfassen, die sich in einem montierten Zustand des als Flügelrahmen einer Tür dienenden Rahmens in einen Türspalt erstrecken.

Um eine Wärmeübertragung von dem Außenprofil auf das Innenprofil zu minimieren und gleichzeitig eine relativ kleine Auflagefläche zu schaffen, sind bevorzugt zwischen den Klipsarmen Distanznasen angeordnet. Sind beispielsweise an dem Außenprofil zwei rippenförmige Distanznasen angeformt und befindet sich zwischen diesen Distanznasen eine an dem Innenprofil angeformte rippenartige Distanznase, dann ist das Außenprofil gegenüber dem Innenprofil gegen eine seitliche Verschiebung, die nicht der Längsrichtung entspricht, gesichert.

In Ausgestaltung weist das Innenprofil an seiner der Breitseite mit den Hinterschnitten gegenüberliegenden Breitseite einen sich über eine rahmenaußenseitige Profilstirnseite hinausersteckenden Fortsatz auf, der zur Halterung einer Dichtung mit einer Nut versehen ist. Der Fortsatz bildet einen Art Falz, der an dem Innenprofil angeformt ist, Bei einer montierten gegen eine Zarge anliegende Dichtung ist eine zusätzliche Dichtungsebene geschaffen, die eine Verbesserung des Wärmedurchgangskoeffizienten (U-Wert) und eine Verminderung der Luftdurchlässigkeit in der Konvektionszone des Türfalzes bewirkt, wobei eine erste Dichtung auf der Außenseite zwischen der Zarge und dem von Flügelrahmen und Füllung gebildeten Türblatt wirkt.

Nach einer alternativen Weiterbildung ist zwischen dem Innenprofil und dem Außenprofil mindestens eine in Richtung der Längsachse verschiebbare Nut-Feder-Verbindung vorgesehen. Zweckmäßigerweise ist die Nut-Feder-Verbindung im Querschnitt T-förmig oder schwalbenschwanzförmig ausgebildet. Auch die T-Nut- bzw. Schwalbenschwanzverbindung zwischen dem Innenprofil und dem Außenprofil lassen eine Relativbewegung dieser beiden Profile in Richtung der Längsachse zu, wodurch bei einer unterschiedlichen Längenänderung der beiden Profile, insbesondere aufgrund unterschiedlicher Temperaturen auf der Außenseite und der Innenseite, eine unerwünschte Verformung über die Länge vermieden bzw. wesentlich reduziert ist.

Da die Längenänderung über die Höhe der Tür, die durch die Länge der längsseitigen Rahmenelemente bestimmt ist, für die thermisch beeinflusste Verformung von besonderer Bedeutung ist, ist vorzugsweise die Klipsverbindung oder die Nut-Feder-Verbindung den längsseitigen Rahmenelementen zugeordnet.

Zweckmäßigerweise ist das eine längsseitige Rahmenelement einer Schließseite und das andere längsseitige Rahmenlängselement einer Bandseite zugeordnet. Beispielsweise können an den entsprechenden Innenprofilen Bänder oder Schließelemente befestigt sein.

Vorteilhafterweise ist die Füllung auf der Außenseite und/oder der Innenseite der Rahmenelemente festgelegt. Auf der Außenseite ist die Füllung bzw. deren Deckschicht auf der freien Stirnseite des kurzen Schenkels des Außenprofils befestigt, so dass eine Wärmeübergangsfläche in diesem Bereich relativ klein bemessen ist. Die Füllung überdeckt den Rahmen, der sonach für einen Betrachter bei einer geschlossenen Tür nicht sichtbar ist, weshalb die Rahmenprofile aus beliebigen Werkstoffen bzw. Werkstoffkombinationen gefertigt sein können, die sich optisch nicht störend auswirken.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrere Ausführungsbeispiele unter Bezugnahme auf die zugehörige Zeichnung näher erläutert.

Es zeigt:

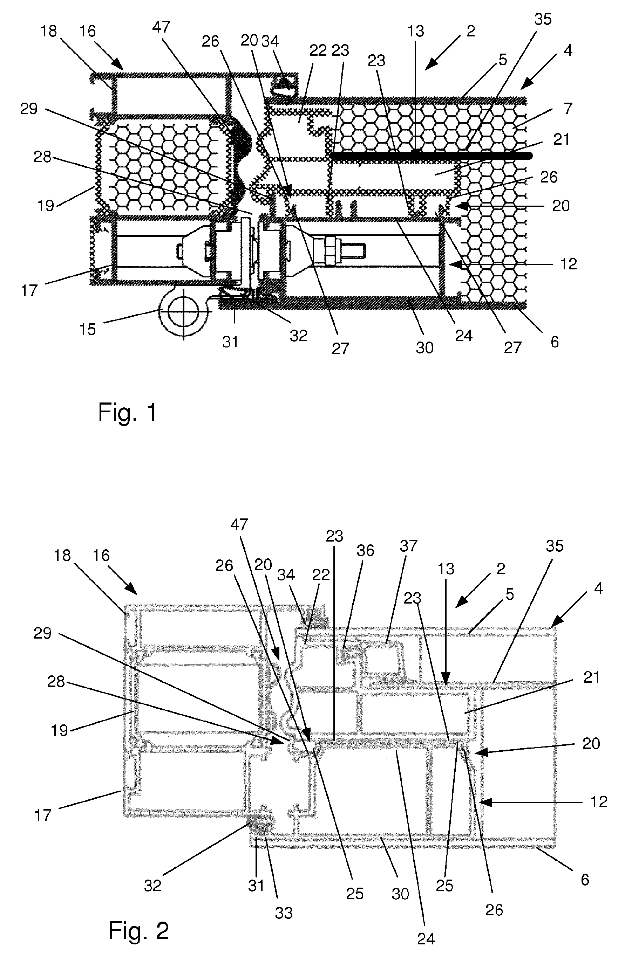

- Fig. 1: eine Schnittdarstellung einer Bandseite eines an einer Zarge befestigten Türflügels mit einem Rahmen nach der Erfindung,
- Fig. 2: eine Schnittdarstellung des der Zarge zugeordneten Rahmens nach Fig. 1 in alternativer Ausgestaltung,
- Fig. 3: eine perspektivische Teildarstellung eines Rahmenelementes des Rahmens nach Fig. 1,
- Fig. 4: eine weitere perspektivische Teildarstellung des Rahmenelementes des Rahmens nach Fig. 1,
- Fig. 5: eine schematische Darstellung einer Tür mit dem Rahmen nach Fig. 1 und,

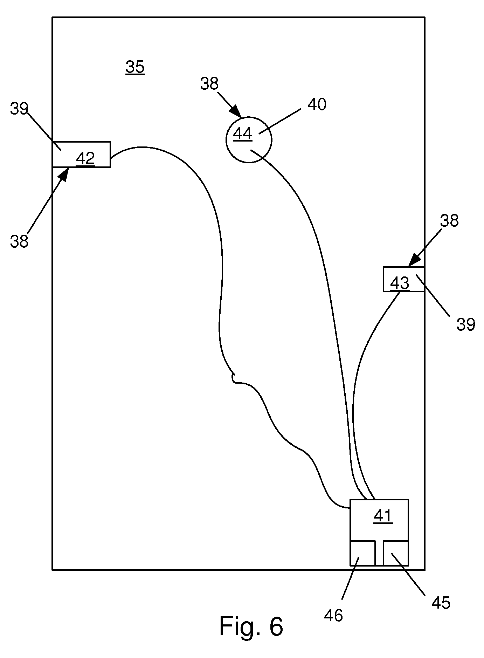

- Fig. 6: eine schematische Darstellung eines Funktionsträgers.

Eine Tür 1 umfasst einen Türflügel 2, der im Wesentlichen aus einem Rahmen 3 mit einer zugeordneten Füllung 4 zusammengesetzt ist, wobei die Füllung 4 vorliegend eine äußere Deckschicht 5 und eine innere Deckschicht 6 sowie eine zwischen den Deckschichten angeordnete Dämmschicht 7 zur Wärmeisolierung umfasst. Der Rahmen 3 weist zwei längsseitige Rahmenelemente 8 und zwei breitseitige Rahmenelemente 9 auf, die jeweils rechtwinklig verbunden sind, wobei das eine längsseitige Rahmenelement 8 einer Schließseite 10 und das andere längsseitige Rahmenelement 8 einer Bandseite 11 der Tür 1 zugeordnet ist. Jedes der längsseitigen Rahmenelemente 8 ist aus einem Innenprofil 12 und einem derart kraftschlüssig oder formschlüssig damit verbundenen Außenprofil 13 zusammengesetzt, dass das Innenprofil 12 relativ zu dem Außenprofil 13 in Richtung einer Längsachse gemäß dem Doppelpfeil 14 verschiebbar ist. Das Innenprofil 12 auf der Bandseite 11 ist mit einem Ende eines Bandes 15 festverbunden, dessen anderes Ende mit einer Zarge 16 gekoppelt ist, die im Wesentlichen aus einem Innenzargenhohlprofil 17 und einem Außenzargenhohlprofil 18 mit einem dazwischen angeordneten thermischen Trennprofil 19 zusammengesetzt ist. Das Innenzargenhohlprofil 17 ist mit dem Trennprofil 19 und das Trennprofil 19 mit dem Außenzargenhohlprofil 18 fest verpresst.

Zur Vermeidung einer Verformung des Türflügels 2 aufgrund relativ großer Temperaturunterschiede zwischen der Außenseite und der Innenseite der Tür 1, die unterschiedliche Längendehnungen des Außenprofils 13 und des Innenprofils 12 der längsseitigen Rahmenelemente 8 zur Folge haben, wirken zwischen dem Außenprofil 13 und dem Innenprofil 12 Klipsverbindungen 20, die das Außenprofil 13 gegenüber dem Innenprofil 12 in zwei Achsen fixieren und in einer Achse eine Bewegung gemäß dem Doppelpfeil 14 zulassen. Selbstverständlich sind die Klipsverbindungen nur beispielhafte Ausgestaltungen einer derartigen Verbindung mit einem Freiheitsgrad. Es ist auch möglich, beispielsweise eine Nut-Feder-Verbindung in T-Form oder Schwalbenschwanz-Form oder dergleichen zu realisieren, um die gleiche Wirkung zu erzielen.

Das Außenprofil 13 ist als ein im Querschnitt L-förmiges Hohlkammerprofil mit einem langen Schenkel 21 und einem dazu rechtwinklig verlaufenden kurzen Schenkel 22 ausgebildet. Der kurze Schenkel 22 des Außenprofils 13 verläuft in der Zarge 16 und dessen freie Stirnseite bildet eine Auflage für die äußere Deckschicht 5 der Füllung 4. Im Weiteren ist dem kurzen Schenkel 22 eine Dichtwölbung 47 zugeordnet. Der lange Schenkel 21 des Außenprofils 13 ist parallel zu dem im Querschnitt rechteckförmigen Hohlkammerprofil des Innenprofils 12 ausgerichtet und verläuft mittels an dem Außenprofil 13 angeformter Distanznasen 23 beabstandet zu einer Breitseite 24 des Innenprofils 12. Die dem Außenprofil 13 zugewandte Breitseite des 24 des Innenprofils 12 weist hakenförmige Hinterschnitte 25 auf, die mit an dem Außenprofil 13 angeformten Klipsarmen 26 zusammenwirken. Die hakenförmigen Hinterschnitte 25 können alternativ in Form von Gegenklipsarmen 27 an dem Innenprofil 12 ausgeformt sein. Im Weiteren befindet sich an einer rahmenaußenseitigen Profilstirnseite 28 des Innenprofils 12 ein Distanznocken 29, der an dem Außenprofil 13 anliegt.

Die der Breitseite 24 mit den Hinterschnitten 25 gegenüberliegende Breitseite 30 des Innenprofils 12 weist einen sich über die rahmenaußenseitige Profilstirnseite 28 hinausersteckenden Fortsatz 31 auf, der mit der Profilstirnseite 28 einen Falz bildet und zur Halterung einer innenseitigen Dichtung 32, die sich im geschlossenen Zustand der Tür 1 auf der Zarge 16 abstützt, mit einer Nut 33 versehen ist. Der Fortsatz 31 und die entsprechende Breitseite 30 des Innenprofils 12 sind von der inneren Deckschicht 6 überspannt. Auf der Außenseite der Tür 1 ist der Zarge 16 eine umlaufende Dichtung 34 zugeordnet, die im geschlossenen Zustand der Tür 1 auf der äußeren Deckschicht 5 der Füllung 4 vorgespannt aufliegt.

Herrscht auf der Außenseite der Tür 1 eine relativ hohe Temperatur, beispielsweise durch eine unmittelbare Sonneneinstrahlung, dann erfährt das aus einer Aluminiumlegierung oder einem Kunststoff gefertigte Außenprofil 13 eine verhältnismäßig große Längendehnung in Relation zu dem Innenprofil 12. Bei einem aus dem Stand der Technik bekannten Rahmen verformt sich dieser mit einer nach innen gerichteten Wölbung.

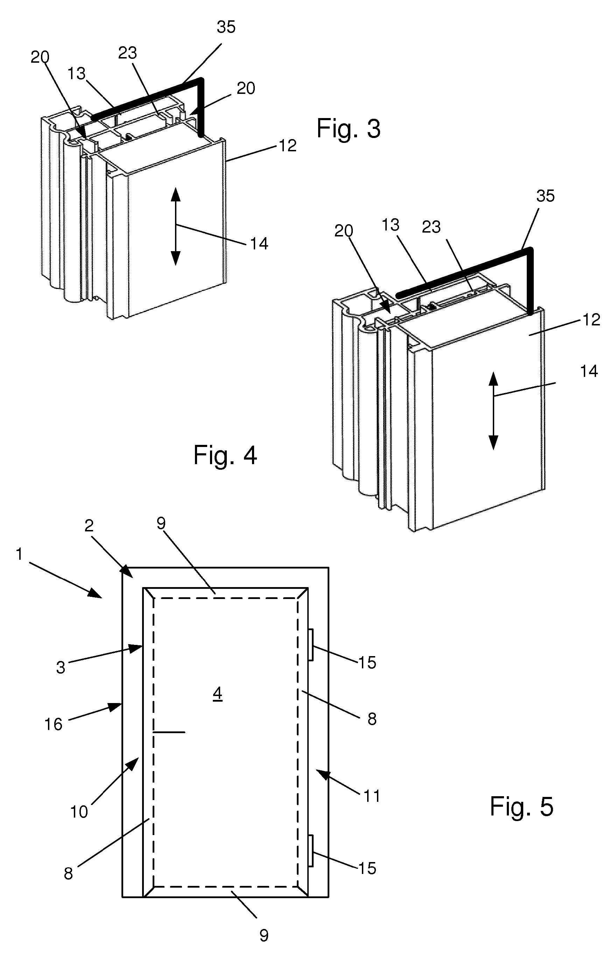

Bei dem vorliegenden Rahmen erfolgt nach Fig. 4 eine Längenänderung des Außenprofils 13 ohne Auswirkung auf die Längenänderung oder die Verformung des Innenprofils12 aufgrund der Verbindung mit dem Freiheitsgrad in Richtung der Längsachse des Rahmens 3.

Ist die Temperatur auf der Innenseite der Tür 1 höher als auf der Außenseite der Tür, wie es beispielsweise im Winter die Regel ist, dann erfährt das Außenprofil 13 eine in Relation zu dem Innenprofil 12 verringerte Längendehnung, die bei einer festen Verbindung, wie von einem Bimetall bekannt, zu einer Wölbung in Richtung der Außenseite der Tür 1 führt. Aufgrund der Verbindung mit dem einen Freiheitsgrad in Richtung der Längsachse des Rahmens 3 erfolgt eine Verschiebung des Innenprofils 12 relativ zu dem Außenprofil 13, wie in Fig. zu erkennen ist.

Um der Tür eine weitere Funktionalität zuzuweisen, ist ein auf dem langen Schenkel 21 des Außenprofils 13 aufliegender Funktionsträger 35 angeordnet, der mit dem Außenprofil 13 verschraubt oder verklebt sein kann. Es ist auch möglich, den Funktionsträger 35 zusätzlich oder alternativ kraftschlüssig an dem langen Schenkel 21 des Außenprofils 13 festzulegen, wozu das Außenprofil 13 in seinem kurzen Schenkel 22 eine Aufnahmenut 36 für eine Klemmleiste 37 aufweist, die nach Art einer aus dem Stand der Technik bekannten Glashalteleiste wirkt und befestigt ist.

Der Funktionsträger 35 kann sich beispielsweise über die gesamte Innenfläche des Türflügels 2 erstrecken und wärmedämmende und/oder schalldämmende und/oder einbruchshemmende und/oder beschusssichere Eigenschaften aufweisen. Es ist zusätzlich oder alternativ möglich, dem Funktionsträger 35 Funktionselemente 38 Aktoren 39, beispielsweise eines Schließmechanismus, und/oder Sensoren 40, beispielsweise einer Bild- und/oder Tonerfassungseinrichtung, zuzuordnen. Insbesondere die Aktoren 39 und Sensoren 40 lassen sich über entsprechende Schnittstellen, die ebenfalls auf dem flächigen Funktionsträger 35 angeordnet sein können, drahtlos oder drahtgebunden mit einem Rechner einer Datenverarbeitungseinrichtung, vorzugsweise einer Haussteuerung, über eine Datenübertragungseinrichtung 41 verbinden. Selbstverständlich kann der Datenübertragungseinrichtung 41 ein Rechnermodul 45 mit einem Speichermodul 46 zugeordnet sein. Vorliegend ist einer der Aktoren 39 als ein Motor 42 ausgebildet, der zum Verschwenken der Tür 1 dient. Ein weiterer Aktor 39 ist ein Verschlussmotor 43, der mit einem Verriegelungsmechanismus der Tür 1 zusammenwirkt. Im Weiteren ist als Sensor 40 eine Bilderfassungseinrichtung 44 vorgesehen, die zum einen mit einer Gesichts- und/oder Augenerkennung zusammenwirkt, um einem Berechtigten durch die Ansteuerung des Motors 42 und/oder des Verschlussmotors 43 die Tür 1 zu öffnen. Mittels der mit einer Anzeigeeinrichtung über die Datenübertragungseinrichtung 41 verbundenen Bilderfassungseinrichtung 44 kann auch eine Umgebung der Tür 1 dargestellt werden. Ein Bilderfassungssensor, dem eine optische Einrichtung, beispielsweise eine Linse oder ein Objektiv, zugeordnet sein kann, ist in einem transparenten oder ausgeschnittenen bzw. freigeschnittenen Bereich, insbesondere der äußeren Deckschicht 5 angeordnet.

Auch ein als Fingerabdruckerkennungssensor ausgebildeter Sensor 40 ist derart installiert, dass er beispielsweise in der äußeren Deckschicht 5 frei zugänglich ist. Um eine gute Tonübertragung bzw. Tonerfassung zu realisieren, ist beispielsweise ein Mikrofon an dem Funktionsträger 35 in einem Bereich festgelegt, in dem die äußere Deckschicht 5 perforiert ist. Die Bereiche der Deckschicht 5, 6, die für die zugeordneten Sensoren 40 eine besondere Funktionalität aufweisen müssen, sind bevorzugt derart gestaltet, dass diese Funktionalität, wie beispielsweise eine Transparenz oder Perforierung, für einen Betrachter optisch nicht wahrnehmbar ist, beziehungsweise sich optisch nicht störend auswirkt.

**Bezugszeichen**

| | | | |
|---|---|---|---|
| 1. | Tür | 25. | Hinterschnitt |
| 2. | Türflügel | 26. | Klipsarm |
| 3. | Rahmen | 27. | Gegen kl ipsarm |
| 4. | Füllung | 28. | Profilstirnseite |
| 5. | äußere Deckschicht | 29. | Distanznocken |
| 6. | innere Deckschicht | 30. | Breitseite von 12 |
| 7. | Dämmschicht | 31. | Fortsatz |
| 8. | längsseitiges Rahmenelement | 32. | Dichtung |
| | | 33. | Nut |
| 9. | breitseitiges Rahmenelement | 34. | Dichtung |
| | | 35. | Funktionsträger |
| 10. | Schließseite | 36. | Aufnahmenut |
| 11. | Bandseite | 37. | Klemmleiste |
| 12. | Innenprofil | 38. | Funktionselement |
| 13. | Außenprofil | 39. | Aktor |
| 14. | Doppelpfeil | 40. | Sensor |
| 15. | Band | 41. | Datenübertragungseinrichtung |
| 16. | Zarge | | |
| 17. | Innenzargenhohlprofil | 42. | Motor |
| 18. | Außenzargenhohlprofil | 43. | Verschlussmotor |
| 19. | Trennprofil | 44. | Bilderfassungseinrichtung |
| 20. | Klipsverbindung | | |
| 21. | langer Schenkel v. 13 | 45. | Rechnermodul |
| 22. | kurzer Schenkel v. 13 | 46. | Speichermodul |
| 23. | Distanznase | 47. | Dichtwölbung |
| 24. | Breitseite von 12 | | |

## Patentansprüche

1. Türflügel umfassend einen Rahmen (3) mit mindestens zwei längsseitigen Rahmenelementen (8)und zumindest einer Deckschicht (5, 6), wobei
- jedes der Rahmenelemente ein zu einer Raumseite orientiertes Innenprofil und ein zu einer Außenseite orientiertes Außenprofil umfasst,
- das Innenprofil (12) derart formschlüssig mit dem Außenprofil (13) verbunden ist, dass das Innenprofil relativ zu dem Außenprofil (13) in Richtung einer Längsachse (Doppelpfeil 14) verschiebbar ist,
**dadurch gekennzeichnet, dass**
- das Außenprofil (13) als ein im Querschnitt L-förmiges Hohlkammerprofil mit einem langen Schenkel (21) und einem dazu rechtwinklig verlaufenden kurzen Schenkel (22) ausgebildet ist, wobei eine freie Stirnseite des kurzen Schenkels (22) eine Auflage für die äußere Deckschicht (5) einer Füllung (4) bildet und
- ein auf dem langen Schenkel (21) des Außenprofils (13) aufliegender und in wesentlichen Teilen von der Deckschicht (5, 6) überdeckter Funktionsträger (35) angeordnet ist, der mit dem Außenprofil (13) an dem langen Schenkel (21) des Außenprofils (13) festgelegt ist, wozu das Außenprofil (13) in seinem kurzen Schenkel (22) eine Aufnahmenut (36) für eine Klemmleiste (37) zur Fixierung des Funktionsträgers (35) auf dem langen Schenkel (21) aufweist.

2. Türflügel nach Anspruch 1, **dadurch gekennzeichnet, dass** der Funktionsträger (35) zumindest die von dem Rahmen (3) gebildete Innenfläche überspannt oder laschenartig an einem der Rahmenelemente (8) befestigt oder riegelförmig zwischen zwei Rahmenelementen (8) angeordnet ist.

3. Türflügel nach Anspruch 1 oder 2, **dadurch gekennzeichnet, dass** der Funktionsträger (35) zur Speicherung von Wärme oder als Dämmung gegen Schall, Wärme, Strahlung, oder Schadstoffe oder beständig gegen Beschuss oder Einbruch oder Feuer ausgebildet ist.

4. Türflügel nach einem der Ansprüche 1 bis 3, **dadurch gekennzeichnet, dass** dem Funktionsträger (35) mindestens ein elektrisches oder elektromechanisches Funktionselement (38) zugeordnet ist.

5. Türflügel nach Anspruch 4, **dadurch gekennzeichnet, dass** das Funktionselement (38) bei einer lichtstrahlungsdurchlässigen Füllung (4) als ein Photovoltaikelement ausgebildet ist, das mit einem weiteren elektrischen oder elektromechanischen Funktionselement (38) zur Speicherung elektrischer Energie oder zur Versorgung mit elektrischer Energie gekoppelt ist.

6. Türflügel nach Anspruch 4 oder 5, **dadurch gekennzeichnet, dass** das Funktionselement (38) als ein Sensor (40) und/oder Aktor (39) ausgebildet ist, insbesondere als ein Sensor (40) einer Bilderfassungseinrichtung (44) oder einer Tonerfassungs- oder Tonwidergabeeinrichtung oder ein Lagesensor oder ein Erschütterungssensor oder Fingerabdruckerkennungssensor, oder ein Aktor (39) einer Schließanlage oder einer Verriegelungseinrichtung, wobei die Sensoren (40) und/oder die Aktoren (39) mit einer Datenverarbeitungseinrichtung einer Hausautomatisierungseinrichtung in Verbindung stehen, oder das Funktionselement (38) als ein optisch und/oder akustisch wahrnehmbares Signalelement ausgestaltet und vorzugsweise mit einer Alarmanlage verbunden ist.

7. Türflügel nach Anspruch 1, **dadurch gekennzeichnet, dass** innerhalb des Rahmens (3) eine Datenübertragungseinrichtung (41) angeordnet ist.

8. Türflügel nach Anspruch 1, **dadurch gekennzeichnet, dass** zwischen dem Innenprofil (12) und dem Außenprofil (13) eine in Richtung der Längsachse (Doppelpfeil 14) verschiebbare Klipsverbindung (20) vorgesehen ist.

9. Türflügel nach Anspruch 8, **dadurch gekennzeichnet, dass** der lange Schenkel (21) des Außenprofils (13) auf der einen Seite die zueinander beabstandeten Klipsarme (26) aufweist und auf der gegenüberliegenden Seite als Auflage des Funktionsträgers (35) dient, wobei die Klipsarme (26) mit Hinterschnitten (25) des als ein im Querschnitt rechteckförmiges Hohlkammerprofil ausgebildeten Innenprofils (12) zusammenwirken.

10. Türflügel nach einem der Ansprüche 1 bis 9, **dadurch gekennzeichnet, dass** das Außenprofil (13) an einer rahmenaußenseitigen Profilstirnseite (28) mindestens eine sich über die gesamte Länge erstreckende konvexe Dichtwölbung (47) aufweist.

11. Türflügel nach Anspruch 1, **dadurch gekennzeichnet, dass** das Innenprofil (12) an seiner einer Breitseite (24) mit den Hinterschnitten (25) gegenüberliegenden Breitseite (30) einen sich über eine rahmenaußenseitige Profilstirnseite (28) hinausersteckenden Fortsatz (31) aufweist, der zur Halterung einer Dichtung (32) mit einer Nut (33) versehen ist.

12. Türflügel nach Anspruch 1, **dadurch gekennzeichnet, dass** zwischen dem Innenprofil (12) und dem Außenprofil (13) mindestens eine in Richtung der Längsachse (Doppelpfeil 14) verschiebbare Nut-Feder-Verbindung vorgesehen ist, die im Querschnitt T-förmig oder schwalbenschwanzförmig ausgebildet ist.

13. Türflügel nach Anspruch 8 oder 12, **dadurch gekennzeichnet, dass** die Klipsverbindung (20) oder die Nut-Feder-Verbindung den längsseitigen Rahmenelementen (8) zugeordnet ist, wobei das eine längsseitige Rahmenelement (8) einer Schließseite (10) und das andere längsseitige Rahmenlängselement (8) einer Bandseite (11) zugeordnet ist.

## Claims

1. Door leaf comprising a frame (3) with at least two longitudinal frame elements (8) and at least one cover layer (5, 6), wherein
- each of the frame elements comprises an inner profile oriented towards a room side and an outer profile oriented towards an outer side,
- the inner profile (12) is connected to the outer profile (13) in a form-fitting manner in such a way that the inner profile is displaceable relative to the outer profile (13) in the direction of a longitudinal axis (double arrow 14),
**characterized in that**
- the outer profile (13) is designed as a cross-sectionally L-shaped hollow-chamber profile with a long leg (21) and a short leg (22) extending at a right angle thereto, wherein a free end side of the short leg (22) forms a support for the outer cover layer (5) of an infill (4), and
- a functional carrier (35) which bears on the long leg (21) of the outer profile (13) and is covered in substantial parts by the cover layer (5, 6) is arranged, which functional carrier is secured to the outer profile (13) on the long leg (21) of the outer profile (13), for which purpose the outer profile (13) has, in its short leg (22), a receiving groove (36) for a clamping strip (37) for fixing the functional carrier (35) on the long leg (21).

2. Door leaf according to Claim 1, **characterized in that** the functional carrier (35) spans at least the inner surface formed by the frame (3) or is fastened in a strap-like manner to one of the frame elements (8) or is arranged in a bar-like manner between two frame elements (8).

3. Door leaf according to Claim 1 or 2, **characterized in that** the functional carrier (35) is designed to store heat or as a barrier against sound, heat, radiation or pollutants or to be resistant to bombardment or break-in or fire.

4. Door leaf according to one of Claims 1 to 3, **characterized in that** the functional carrier (35) is assigned at least one electrical or electromechanical functional element (38).

5. Door leaf according to Claim 4, **characterized in that,** with a light-radiation-permeable infill (4), the functional element (38) is designed as a photovoltaic element which is coupled to a further electrical or electromechanical functional element (38) for storing electrical energy or for supplying with electrical energy.

6. Door leaf according to Claim 4 or 5, **characterized in that** the functional element (38) is designed as a sensor (40) and/or actuator (39), in particular as a sensor (40) of an image-detecting device (44) or of a sound detection or sound reproduction device or a position sensor or a vibration sensor or fingerprint recognition sensor, or an actuator (39) of a closing system or of a locking device, wherein the sensors (40) and/or the actuators (39) are connected to a data processing device of a domestic automation device, or the functional element (38) is designed as a visually and/or acoustically perceptible signal element and is preferably connected to an alarm system.

7. Door leaf according to Claim 1, **characterized in that** a data transmission device (41) is arranged within the frame (3).

8. Door leaf according to Claim 1, **characterized in that** a clip connection (20) which is displaceable in the direction of the longitudinal axis (double arrow 14) is provided between the inner profile (12) and the outer profile (13).

9. Door leaf according to Claim 8, **characterized in that** the long leg (21) of the outer profile (13) has the spaced-apart clip arms (26) on one side and serves as a support for the functional carrier (35) on the opposite side, wherein the clip arms (26) interact with undercuts (25) of the inner profile (12) which is designed as a cross-sectionally rectangular hollow-chamber profile.

10. Door leaf according to one of Claims 1 to 9, **characterized in that** the outer profile (13) has, on a profile end side (28) on the frame outer side, at least one convex sealing arch(47) extending over the entire length.

11. Door leaf according to Claim 1, **characterized in that** the inner profile (12) has, on its wide side (30) opposite a wide side (24) with the untercuts (25), an extension (31) which extends beyond a profile end side (28) on the frame outer side and which is provided to hold a seal (32) having a groove (33).

12. Door leaf according to Claim 1, **characterized in that** at least one tongue and groove connection which is displaceable in the direction of the longitudinal axis (double arrow 14) and which is cross-sectionally T-shaped or dovetail-shaped is provided between the inner profile (12) and the outer profile (13).

13. Door leaf according to Claim 8 or 12, **characterized in that** the clip connection (20) or the tongue and groove connection is assigned to the longitudinal frame elements (8), wherein one longitudinal frame element (8) is assigned to a closing side (10) and the other longitudinal frame element (8) is assigned to a hinge side (11).

## Revendications

1. Ventail de porte comprenant un cadre (3) ayant au moins deux éléments de cadre longitudinaux (8) et au moins une couche de couverture (5, 6), dans lequel
- chacun des éléments de cadre comprend un profil intérieur orienté vers un côté intérieur et un profil extérieur orienté vers un côté extérieur,
- le profil intérieur (12) est relié par complémentarité de forme au profil extérieur (13) de manière à ce que le profil intérieur puisse être décalé par rapport au profil extérieur (13) dans la direction d'un axe longitudinal (double flèche 14),
**caractérisé en ce que**
- le profil extérieur (13) est réalisé sous la forme d'un profil de chambre creuse ayant la forme d'un L en section transversale présentant une branche longue (21) et une branche courte (22) s'étendant à angle droit par rapport à celle-ci, dans lequel une face avant libre de la branche courte (22) forme un point d'appui pour la couche de couverture extérieure (5) d'une garniture (4), et
- un support fonctionnel (35) reposant sur la branche longue (21) du profil extérieur (13) et revêtu dans les parties essentielles par la couche de couverture (5, 6), qui est fixé au profil extérieur (13) à l'emplacement de la branche longue (21) du profil extérieur (13), le profil extérieur (13) présentant à cet effet dans sa branche courte (22) une rainure de réception (36) destinée à une barre de serrage (37) permettant de fixer le support fonctionnel (35) à la branche longue (21).

2. Ventail de porte selon la revendication 1, **caractérisé en ce que** le support fonctionnel (35) enjambe au moins la surface intérieure formée par le cadre (3) et est fixé à la manière d'une patte à l'un des éléments de cadre (8) ou est disposé à la manière d'une traverse entre les éléments de châssis (8).

3. Ventail de porte selon la revendication 1 ou 2, **caractérisé en ce que** le support fonctionnel (35) est réalisé de manière à accumuler de la chaleur ou sous la forme d'un blindage contre le son, la chaleur, les rayonnements ou les contaminants ou **en ce qu'**il est réalisé de manière durable afin de résister au tir ou aux effractions ou au feu.

4. Ventail de porte selon l'une quelconque des revendications 1 à 3, **caractérisé en ce qu'**au moins un élément fonctionnel (38) électrique ou électromécanique est associé au support fonctionnel (35).

5. Ventail de porte selon la revendication 4, **caractérisé en ce que** l'élément fonctionnel (38), dans le cas d'une garniture (4) transparente aux rayonnements lumineux, est réalisé sous la forme d'un élément photovoltaïque qui est couplé à un autre élément fonctionnel (38) électrique ou électromécanique pour accumuler de l'énergie électrique ou pour délivrer de l'énergie électrique.

6. Ventail de porte selon la revendication 4 ou 5, **caractérisé en ce que** l'élément fonctionnel (38) est réalisé sous la forme d'un capteur (40) et/ou d'un actionneur (39), notamment sous la forme d'un capteur (40) d'un dispositif d'acquisition d'image (44) ou d'un dispositif de détection de fréquence vocale ou de restitution de fréquence vocale ou d'un capteur de position ou d'un capteur de choc ou d'un capteur de reconnaissance d'empreinte digitale, ou d'un actionneur (39) d'une installation de fermeture ou d'un dispositif de verrouillage, dans lequel les capteurs (40) et/ou les actionneurs (39) sont reliés à un dispositif de traitement de données d'un dispositif de domotique, ou l'élément fonctionnel (38) est conçu sous la forme d'un élément générateur de signal perceptible optiquement et/ou acoustiquement et de préférence relié à un système d'alarme.

7. Ventail de porte selon la revendication 1, **caractérisé en ce qu'**un dispositif de transmission de données (41) est disposé à l'intérieur du cadre (3).

8. Ventail de porte selon la revendication 1, **caractérisé en ce qu'**il est prévu une liaison de clipsage (20) pouvant être décalée dans la direction de l'axe longitudinal (double flèche 14) entre le profil intérieur (12) et le profil extérieur (13).

9. Ventail de porte selon la revendication 8, **caractérisé en ce que** la branche longue (21) du profil extérieur (13) présente sur l'une de ses faces des bras de clipsage (26) mutuellement espacés, et sur la face opposée, est utilisée en tant que point d'appui du support fonctionnel (35), dans lequel les bras de clipsage (26) coopèrent avec des contre-dépouilles (25) du profil intérieur (12) réalisé sous la forme d'un profil de chambre creuse rectangulaire en section transversale.

10. Ventail de porte selon l'une quelconque des revendications 1 à 9, **caractérisé en ce que** le profil extérieur (13) présente, sur une face avant de profil (28) située du côté extérieur au cadre, un bombement en épaisseur (47) convexe s'étendant sur la totalité de la longueur.

11. Ventail de porte selon la revendication 1, **caractérisé en ce que** le profil intérieur (12) présente, sur son côté large (30) opposé à un côté large (24) présentant les contre-dépouilles (25), une saillie (31) pénétrant par l'intermédiaire d'une face avant de profil intérieur (28) située du côté extérieur au cadre, laquelle saillie est munie d'une rainure (33) destinée à supporter un joint (32).

12. Ventail de porte selon la revendication 1, **caractérisé en ce qu'**il est prévu entre le profil intérieur (12) et le profil extérieur (13) au moins une liaison par rainure et languette pouvant être décalée dans la direction de l'axe longitudinal (double flèche 14), qui est réalisée de manière à présenter la forme d'un T ou une forme de queue d'aronde en section transversale.

13. Ventail de porte selon la revendication 8 ou 12, **caractérisé en ce que** la liaison de clipsage (20) ou la liaison par rainure et languette est associée aux éléments de cadre longitudinaux (8), dans lequel l'un des éléments de cadre longitudinaux (8) est associé à une face de fermeture (10) et l'autre des éléments de cadre longitudinaux (8) est associé à un côté formant charnière (11).
